# EUROPÄISCHE PATENTANMELDUNG

(11) **EP 3 960 783 A1**
(43) Veröffentlichungstag der Anmeldung: **02.03.2022**
(21) Anmeldenummer: 20193788.5
(22) Anmeldetag: 01.09.2020
(51) Int. Cl.: C08G 18/48, C08G 18/50, C08G 18/56, C08G 18/76, C08L 59/04

(54) **ISOCYANAT-TERMINIERTE PREPOLYMERE AUF BASIS VON POLYOXYMETHYLEN-POLYOXYALKYLEN-BLOCKCOPOLYMEREN, VERFAHREN ZUR DEREN HERSTELLUNG UND DEREN VERWENDUNG**

(71) Anmelder: Covestro Deutschland AG, 51373 Leverkusen (DE)
(72) Erfinder: ZORN, Anna-Marie, 76275 Ettlingen (DE); THIEBES, Christoph, 51061 Köln (DE); BAUMBACH, Beate, 51399 Burscheid (DE); STUTE, Annika, 50733 Köln (DE); WEINKRAUT, Michael, 40764 Langenfeld (DE); SCHUETZE, Mike, 51379 Leverkusen (DE)
(74) Vertreter: Levpat

(57) **Zusammenfassung**

Die vorliegende Erfindung betrifft Isocyanat-terminierte Prepolymere auf Basis von Polyoxymethylen-Polyoxyalkylen-Blockcopolymeren, ein Verfahren zu deren Herstellung, sowie die Verwendung dieser Isocyanat-terminierten Prepolymere als Isocyanat-Komponente in 1- und 2-Komponenten Systemen für Lacke, Kleb- und Dichtstoffe.

## Beschreibung

Die vorliegende Erfindung betrifft Isocyanat-terminierte Prepolymere auf Basis von Polyoxymethylen-Polyoxyalkylen-Blockcopolymeren und ein Verfahren zu deren Herstellung. Außerdem betrifft die vorliegende Erfindung die Verwendung dieser Isocyanat-terminierten Prepolymere als Isocyanat-Komponente in 1- und 2-Komponenten Systemen für Lacke, Kleb- und Dichtstoffe.

Isocyanat-terminierte Prepolymere werden auf vielen technischen Gebieten, insbesondere zur Verklebung und Beschichtung von Substraten, sowie in Dichtstoffen eingesetzt. Dabei kommen sowohl feuchtigkeitshärtende 1-Komponentensysteme als auch 2-Komponentensysteme zum Einsatz, wobei häufig Polyole und/oder Polyamine als Reaktionspartner für die Isocyanat-terminierten Prepolymere eingesetzt werden.

Auf dem Gebiet der feuchtigkeitshärtenden Klebstoffe liegt der Bedarf vor, nachhaltigere Isocyanat-terminierte Prepolymere bereitzustellen, die ohne Säurestabilisierung auskommen. Um für den Einsatz im Bereich von Klebstoffen geeignet zu sein, benötigen die Isocyanat-terminierte Prepolymere eine erhöhte Klebkraft und damit eine hohe Reaktivität gegenüber Luftfeuchtigkeit. Dies ist insbesondere für einen möglichst schnellen, vollständigen Umsatz der freien Isocyanatgruppen wichtig, um frühzeitig die fertigen Gebrauchseigenschaften zu erlangen. Trotzdem muss eine sehr gute Lagerstabilität des Isocyanat-terminierten Prepolymers gegeben sein.

Aus dem Stand der Technik sind verschiedene Prepolymere für die Polyurethansynthese bekannt.

Die WO 2014/095679 offenbart NCO-modifizierte Polyoxymethylen-Blockcopolymere und ihre Verwendung als Prepolymer zur Herstellung von Polyurethan-Weichschaumstoffen und thermoplastischen Polyurethanen. Die Druckschrift offenbart, dass die Viskosität des Prepolymers über die Länge der Polyoxymethylen-Blöcke im Verhältnis zu den zusätzlichen Oligomeren gezielt angesteuert werden könne. Die Druckschrift beschäftigt sich nicht mit der Lagerbeständigkeit des Prepolymers.

In der WO 2004/096746 A1 sind Isocyanat-reaktive Diole mit OH-Zahlen von 685 und 868 mg KOH/g auf Polyoxymethylen (POM) Basis experimentell beschrieben und es wurde in dem Dokument generell dargelegt, dass diese zur Herstellung von Prepolymeren geeignet sein könnten. Eine konkrete Zusammensetzung oder ein Ausführungsbeispiel wurden jedoch nicht beschrieben.

Die zum Zeitpunkt der Einreichung der vorliegenden Erfindung zum Patent noch nicht veröffentlichte internationale Anmeldung mit dem Aktenzeichen PCT/EP2019/057066 beschreibt ein Verfahren zur Herstellung eines Prepolymers für die Herstellung eines Polyurethan-Integralschaumstoffs, wobei die Zusammensetzung zur Herstellung des Prepolymers eine Säure enthält, sowie das durch das Verfahren erhaltene Prepolymer und einen Polyurethanintegral-Schaumstoff basierend auf dem Prepolymer.

Die DE-A 10 237 649 beschreibt einen 1K-Polyurethanklebstoff, der mindestens ein PoIy-Isocyanatprepolymer und mindestes ein Aminopolyetherpolyol enthält, wobei das molare Verhältnis von Ethergruppen zu Aminstickstoff im Aminoetherpolyol 7 bis 30 beträgt. Der Anteil an Aminopolyetherpolyolen am erfindungsgemäßen Klebstoff ist sehr gering und beträgt nur 0,2 bis 4,0 Gew.-%. Dieser geringe Anteil führt unter Dimorpholinodiethylether-Katalyse schon zu einer Halbierung der Presszeit beim Verkleben von Buchenholz. Allerdings wird die offene Zeit (das heißt: die Verarbeitungszeit) auch durch diese geringe Menge an Aminopolyether schon deutlich negativ beeinflusst.

Die WO 2009/000405 A1 beschreibt feuchtigkeitskärtende Klebstoffe auf Basis von Isocyanatprepolymeren, die erhältlich sind aus der Umsetzung von speziellen Polyisocyanatmischungen auf Basis von 2,2'-, 2,4' und 4,4'-MDI mit aminogruppenfreien und aminogruppenhaltigen Polyethern. Die Klebstoffe weisen eine gute Lagerbeständigkeit, eine recht schnelle Filmbildungs- und kurze Filmtrocknungszeit, eine recht gute Anfangs-, sowie Endfestigkeit auf.

Aufgabe der vorliegenden Erfindung war die Bereitstellung von 1- und 2-komponentigen Lack-, Klebstoff- und Dichtstoffsystemen, die eine schnellere Trocknung aufweisen als bekannte Systeme des Standes der Technik. Die Klebstoffsysteme sollten außerdem eine gegenüber den bekannten Systemen verbesserte Klebkraft mit einer schnelleren Filmbildungszeit und kürzeren Filmtrocknungszeit, eine höhere Anfangsfestigkeit nach kurzer Klebzeit, sowie höheren Endfestigkeit nach möglichst kurzer Durchhärtungszeit, und eine mit den bekannten Systemen vergleichbare hohe Lagerbeständigkeit aufweisen.

Überraschend wurde gefunden, dass Lack-, Klebstoff- und Dichtstoffsysteme auf Basis spezieller Isocyanat-terminierter Prepolymere, die Polyoxymethylen-Polyoxyalkylen-Blockcopolymeren als Aufbaukomponente enthalten, diese Eigenschaften aufweisen.

Ein Gegenstand der vorliegenden Erfindung ist daher ein Verfahren zur Herstellung von Isocyanat-terminierten Prepolymeren für die Verwendung als Isocyanat-Komponente in 1- und 2-komponentigen Lack-, Kleb- und Dichtstoffsystemen, umfassend die oder bestehend aus der Umsetzung von
A. mindestens einem aliphatischen, cycloaliphatischen, araliphatischen und/oder aromatischen Polyisocyanat, wobei Komponente A einen NCO-Gehalt nach DIN EN ISO 11909:2007-05 von 15 bis 45 Gew.-% aufweist,
B. mindestens einem Polyoxymethylen-Polyoxyalkylen-Blockcopolymer mit einer Hydroxylzahl gemäß DIN 53240-2:2007-11 von 15 mg KOH/g bis 200 mg KOH/g,
C. i) mindestens einem aminogruppenhaltigen Polyether auf Basis von Propylenoxid mit einer Hydroxylzahl gemäß DIN 53240-2:2007-11 von 40 bis 80 mg KOH/g, einer OH-Funktionalität von 4,0 und einem Amingehalt gemäß DIN EN 9702:1998 im Bereich von 0,5 bis 1,0 Gew.-%, ii) optional mindestens einem aminogruppenhaltigen Polyether auf Basis von Ethylenoxid, Propylenoxid oder einer Mischung von Ehylenoxid und Propylenoxid mit einer NH₂-Funktionalität von 2 oder 3, ausgenommen aminogruppenhaltige Polyether der Komponente Ci,
D. optional Hilfsstoffe, enthaltend Protonensäuren (D2) und/oder Hilfsstoffe, bei denen es sich nicht um Protonensäuren gemäß D2 handelt (D1).

Die erfindungsgemäßen Isocyanat-terminierten Prepolymere auf Basis von Polyoxymethylen-Polyoxyalkylen-Blockcopolymeren sind kostengünstiger als aus Standardbausteinen in PU-Anwendungen aufgebaute Isocyanat-Prepolymere. Weiterhin ist ihr sogenannter Carbon Footprint kleiner, so dass umweltfreundlichere Bausteine für den PU-Markt bereitgestellt werden können.

Unter einer hohen Lagerbeständigkeit wird verstanden, dass sich die dynamische Viskosität des Isocyanat-terminierten Prepolymers nach einer Lagerung für sechs Monate bei 25 °C unter Schutzgasatmosphäre um nicht mehr als 55 % erhöht. Diese Lagerbedingungen wurden simuliert, indem eine Probe bei 70 °C über einen Zeitraum von 14 Tagen unter Stickstoffatmosphäre gelagert wurde. Darüber hinaus soll der NCO-Gehalt des Isocyanat-terminierten Prepolymers während einer Lagerung bei den oben genannten Bedingungen um nicht mehr als 10 % sinken, so dass die Reaktivität des Isocyanat-terminierten Prepolymers auch nach der Lagerung ausreichend hoch ist, um eine gute Klebekraft zu gewährleisten.

**Ausgangsverbindungen A** für das erfindungsgemäße Verfahren sind beliebige Polyisocyanate mit aliphatisch, cycloaliphatisch, araliphatisch und/oder aromatisch gebundenen Isocyanatgruppen. Die Polyisocyanate weisen eine Isocyanat-Funktionalität ≥ 2 auf.

Geeignete Polyisocyanate A sind beliebige, auf verschiedene Weise, beispielsweise durch Phosgenierung in der Flüssig- oder Gasphase oder auf phosgenfreien Weg, wie z. B. durch thermische Urethanspaltung, zugängliche Diisocyanate. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diiso-cyanatodecan, 1,3-und 1,4-Diisocyanatocyclohexan, 1,3-und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 1,5-Diisocyanatonaphthalin (NDI), Norbornandiisocyanat (NBDI), 2,4- und 2,6-Diisocyanatotoluol (TDI), sowie 2,2'-, 2,4'- und 4,4'-Diisocyanatodiphenylmethan (MDI). Weiterhin kann Poly(methylenphenylisocyanat) (pMDI, polymeres MDI, rohes MDI) verwendet werden. Die genannten Polyisocyanate können auch in Mischung miteinander verwendet werden.

Geeignete Polyisocyanate A sind weiterhin beliebige, durch Modifizierung einfacher aliphatischer, cycloaliphatischer, araliphatischer und/oder aromatischer Diisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind oder um beliebige Gemische solcher Polyisocyanate.

Bei der Herstellung dieser Polyisocyanate schließt sich an die eigentliche Modifizierungsreaktion in der Regel ein weiterer Verfahrenschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan. Bevorzugt kommen beim erfindungsgemäßen Verfahren modifizierte Polyisocyanate der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen.

Bevorzugte Polyisocyanate A für das erfindungsgemäße Verfahren sind die oben genannten Polyisocyanate mit ausschließlich aromatisch gebundenen Isocyanatgruppen.

Besonders bevorzugt sind aromatische Polyisocyanate wie z.B. 1,5-Naphthalendiisocyanat (NDI), Diisocyanatodiphenylmethan (2,2'-, 2,4'- und 4,4'-MDI), insbesondere das 2,4'- und das 4,4'-Isomere und technische Gemische dieser beiden Isomere oder technische Gemische der drei MDI-Isomeren, Poly(methylenphenylisocyanat) (pMDI, polymeres MDI, rohes MDI), Diisocyanatomethylbenzol (2,4- und 2,6-Toluylendiisocyanat, TDI), insbesondere das 2,4- und das 2,6-Isomere und technische Gemische der beiden Isomeren.

Ein ganz besonders geeignetes aromatisches Polyisocyanat ist 2,4-Toluylendiisocyanat sowie dessen technisches Gemisch aus 70 bis 90 % 2,4-Toluylendiisocyanat und 30 bis 10 % 2,6-Toluylendiisocyanat.

Ebenfalls ganz besonders geeignet ist ein Polyisocyanatgemisch auf Basis Diphenylmethandiisocyanat mit einem Anteil an 4,4'-Isomeren von < 50%, vorzugsweise < 48%, besonders bevorzugt < 46% und ganz besonders bevorzugt < 44%; einem Anteil an 2,4'-Isomeren im Bereich von 10 bis 15%, besonders bevorzugt 11 bis 14% und besonders bevorzugt 11,5 bis 13,5%; und einem Anteil von 2,2'-Isomeren im Bereich von 0,1 bis 5%, vorzugsweise 1 bis 4% und besonders bevorzugt 1,5 bis 3,5%; einem Isocyanatgehalt zwischen 30 und 33 Gew.%, besonders bevorzugt 31 und 32 Gew.-%; sowie einer mittleren Funktionalität > 2,0, vorzugsweise > 2,2, besonders bevorzugt > 2,4 und ganz besonders bevorzugt > 2,5.

Bevorzugt enthält die Zusammensetzung zur Herstellung des Isocyanat-terminierten Prepolymers 50 Gew.-% bis 70 Gew.-% von Komponente A, bezogen auf die Summe aller Komponenten in der Zusammensetzung.

Bei der im erfindungsgemäßen Verfahren einzusetzenden **Komponente B** handelt es sich um Polyoxymethylen-Polyoxyalkylen-Blockcopolymere mit einer Hydroxylzahl gemäß DIN 53240-2 (November 2007) von 15 mg KOH/g bis 200 mg KOH/g, bevorzugt von 30 mg KOH/g bis 150 mg KOH/g, weiter bevorzugt von 40 mg KOH/g bis 100 mg KOH/g. Bevorzugt enthält die Zusammensetzung zur Herstellung des Isocyanat-terminierten Prepolymers 15 Gew.-% bis 30 Gew.-% von Komponente B, bezogen auf die Summe aller Komponenten in der Zusammensetzung. Polyoxymethylen-Polyoxyalkylen-Blockcopolymere im Sinne der Erfindung bezeichnen polymere Verbindungen, die mindestens einen Polyoxymethylen-Block sowie mindestens einen zusätzlichen Polyoxyalkylen- bzw. Polyoxyalkylencarbonat-Block enthalten und vorzugsweise ein im vierstelligen Bereich liegendes Molekulargewicht nicht überschreiten.

Bevorzugt wird Komponente B durch katalytische Anlagerung von Alkylenoxiden sowie gegebenenfalls weiteren Comonomeren an wenigstens eine polymere Formaldehyd-Starterverbindung, welche wenigstens eine terminale Hydroxylgruppe aufweist, in Gegenwart eines Doppelmetallcyanid (DMC)-Katalysators hergestellt, wobei
(i) in einem ersten Schritt der DMC-Katalysator in Gegenwart der polymeren Formaldehyd-Starterverbindung bei einer Aktivierungstemperatur (Tact) von 20 bis 120 °C aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird ("Aktivierung"),
(ii) in einem zweiten Schritt ein oder mehrere Alkylenoxide sowie gegebenenfalls weitere Comonomere zu der aus Schritt (i) resultierenden Mischung zugesetzt werden, wobei die in Schritt (ii) eingesetzten Alkylenoxide verschieden sind von den bei Schritt (i) eingesetzten Alkylenoxiden ("Polymerisation"),

Als polymere Formaldehyd-Starterverbindung eignen sich grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel HO (CH₂O)n-H sein, wobei n für eine ganze Zahl ≥ 2 steht und wobei polymeres Formaldehyd typischerweise n > 8 Wiederholungseinheiten aufweist.

Bevorzugte polymere Formaldehyd-Starterverbindungen weisen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfassen von 2 bis 1000, bevorzugt von 2 bis 400, besonders bevorzugt von 8 bis 200 und ganz besonders bevorzugt von 8 bis 100 Oxymethylen-Wiederholungseinheiten. Die eingesetzten Starterverbindungen haben typischerweise eine Funktionalität (F) von 1 bis 3, in bestimmten Fällen können diese aber auch höherfunktionell sein, also eine Funktionalität > 3 besitzen. Bevorzugt werden offenkettige polymere Formaldehyd-Starterverbindungen mit terminalen Hydroxylgruppen eingesetzt, welche eine Funktionalität von 1 bis 10, bevorzugt von 1 bis 5, besonders bevorzugt von 2 bis 3 haben. Ganz besonders bevorzugt werden lineare polymere Formaldehyd-Starterverbindungen eingesetzt, welche eine Funktionalität von 2 aufweisen. Die Funktionalität F entspricht der Anzahl an OH-Endgruppen pro Molekül.

Die Herstellung der polymeren Formaldehyd-Starterverbindungen, welche für das Verfahren zur Herstellung von Komponente B eingesetzt werden, kann nach bekannten Verfahren erfolgen (vgl. z.B. M. Haubs et. al., 2012, Polyoxymethylenes, Ullmann's Encyclopedia of Industrial Chemistry; G. Reus et. al., 2012, Formaldehyde, ibid). Die Formaldehyd-Starterverbindungen können grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere sind Copolymere des Formaldehyds sowie des Trioxans mit cyclischen und/oder linearen Formalen, wie beispielsweise Butandiolformal, oder Epoxiden. Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass Formaldehyd-Starterverbindungen wiederum ausgehend von H funktionellen Starterverbindungen hergestellt werden, insbesondere lassen sich hierbei durch den Einsatz von mehrwertigen Starterverbindungen polymere Formaldehyd-Starterverbindungen mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Für das Verfahren zur Herstellung von Komponente B können auch Gemische unterschiedlicher polymerer Formaldehyd-Starterverbindungen oder Gemische mit anderen H-funktionellen Starterverbindungen eingesetzt werden. Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 2500 g/mol und besonders bevorzugt von 62 bis 1000 g/mol aufweisen. Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF^{®} der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt.

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar.

In einer Ausführungsform wird polymeres Formaldehyd bzw. sogenanntes Paraformaldehyd, welches kommerziell und kostengünstig erhältlich ist, direkt als Starterverbindung eingesetzt. Insbesondere lassen sich über das Molekulargewicht und die Endgruppenfunktionalität der polymeren Formaldehyd-Starterverbindung Polyoxymethylen-Blöcke mit definiertem Molgewicht und Funktionalität in das Produkt einbringen.

Vorteilhafterweise kann hierbei im Verfahren zur Herstellung von Komponente B die Länge des Polyoxymethylen-Blocks einfach über das Molekulargewicht der eingesetzten Formaldehyd-Starterverbindung gesteuert werden. Vorzugsweise werden hierbei lineare Formaldehyd-Starterverbindungen der allgemeinen Formel HO-(CH₂O)n-H, wobei n für eine ganze Zahl ≥ 2 steht, bevorzugt mit n = 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-(CH2O)n-H mit jeweils unterschiedlichen Werten für n eingesetzt werden. In einer bevorzugten Ausführungsform enthalten die eingesetzten Gemische von polymeren Formaldehyd-Starterverbindungen der Formel HO-(CH₂O)n-H wenigstens 1 Gew-%, bevorzugt wenigstens 5 Gew.-% und besonders bevorzugt wenigstens 10 Gew.-% an polymeren Formaldehyd-Verbindungen mit n ≥ 20.

Über das Verfahren zur Herstellung von Komponente B können insbesondere Polyoxymethylen-Blockcopolymere erhalten werden, welche eine A-B-A Blockstruktur umfassend einen inneren Polyoxymethylen-Block (B) und äußere oligomere Blöcke (A) aufweisen. Es ist ebenso möglich, dass Formaldehyd-Starterverbindungen mit einer Hydroxy-Endgruppen-Funktionalität F > 2 eingesetzt werden, worüber sich folglich homologe Blockstrukturen B(-A)y mit einer Anzahl y > 2 an äußeren oligomeren Blöcken (A), die entsprechend aus der Funktionalität der eingesetzten Formaldehyd-Starterverbindung resultiert, darstellen lassen. Ebenso ist es grundsätzlich möglich, dass Formaldehyd-Starterverbindungen mit einer Funktionalität F < 2 eingesetzt werden, dies können beispielweise auch lineare Formaldehyd-Starterverbindungen mit F = 1 sein, welche an einem Kettenende mit einer Schutzgruppe oder durch andere chemische Reste substituiert sind.

Bevorzugt besteht Komponente B aus einem Polyoxymethylen-Polypropylenoxid-Blockcopolymer oder ein Polyoxymethylen-Polyoxyalkylencarbonat-Blockcopolymer, wobei das Blockcopolymer bevorzugt zwei endständige Polyoxyalkylenblöcke aufweist.

Vorzugsweise stellen die äußeren oligomeren Blöcke (A) Polyoxyalkylen- oder Polyoxyalkylencarbonat-Blöcke dar, wobei als Polyoxyalkylen- oder Polyoxyalkylencarbonat-Blöcke im Sinne der Erfindung auch solche Blöcke verstanden werden, in welche (geringe) Anteile weiterer Comonomere, im Allgemeinen weniger als 50 mol-%, bevorzugt weniger als 25 mol-%, bezogen auf die Gesamtmenge aller im oligomeren Block vorliegenden Wiederholungseinheiten, einpolymerisiert sind.

Ein Polyoxyalkylencarbonat-Block im Sinne der Erfindung bezeichnet eine polymere Struktureinheit O[(C₂R¹R²R³R⁴O)ₓ(CO₂)(C₂R¹R²R³R⁴O)_{y}]_{z}-, mit x ≥ 1, y ≥ 0 und z ≥ 1, wobei R¹, R², R³ und R⁴ unabhängig voneinander Wasserstoff, ein gegebenenfalls zusätzliches Heteroatom wie Stickstoff, Sauerstoff, Silizium, Schwefel oder Phosphor enthaltender Alkyl- oder Arylrest sein und sich in verschiedenen Wiederholungseinheiten unterscheiden können. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten, die gegebenenfalls mit weiteren Alkylgruppen und/oder Heteroatomen wie Stickstoff, Sauerstoff, Silizium, Schwefel oder Phosphor substituiert sein können. Die Reste R¹, R², R³ und R⁴ können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

Bevorzugt erfolgt die Aktivierung des DMC-Katalysators in Gegenwart der polymeren Formaldehyd-Starterverbindung. Die Starterverbindung und der DMC-Katalysator können hierbei gegebenenfalls in einem Suspensionsmittel suspendiert sein. Ebenso ist es auch möglich eine weitere flüssige Starterverbindung ("Costarter") im Gemisch einzusetzen, wobei der DMC-Katalysator und die polymere Formaldehyd-Starterverbindung in dieser suspendiert sind.

Die Aktivierung des DMC-Katalysators erfolgt erfindungsgemäß bei einer Aktivierungstemperatur Tact im Bereich von 20 bis 120 °C, bevorzugt bei 30 bis 120 °C, besonders bevorzugt bei 40 bis 100 °C und ganz besonders bevorzugt bei 60 bis 100 °C.

Unter "Aktivierung" des DMC-Katalysators ist ein Schritt zu verstehen, bei dem eine Teilmenge Alkylenoxid bei der spezifischen Aktivierungstemperatur zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid ein Druckabfall im Reaktor beobachtet wird.

Für das Verfahren zur Herstellung von Komponente B geeignete DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP A 761 708, WO 97/40086, WO 98/16310 und WO 00/47649 beschrieben sind, besitzen eine sehr hohe Aktivität in der Polymerisation von Alkylenoxiden und ggf. der Copolymerisation von Alkylenoxiden mit geeigneten Comonomeren und ermöglichen die Herstellung von Polyoxymethylen-Copolymeren bei sehr geringen Katalysatorkonzentrationen, so dass eine Abtrennung des Katalysators aus dem fertigen Produkt i. a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten. Bevorzugt werden zur Synthese von Komponenten A1 DMC-Katalysatoren eingesetzt, die unter Zusatz einer Base, bevorzugt KOH, hergestellt wurden. Ein solcher besonders bevorzugter DMC-Katalysator ist ein solcher gemäß Beispiel 6 der WO 01/80994 A1. Bevorzugt wird ein DMC-Katalysaor enthaltend Zinkhexacyanocobaltat, tert-Butanol und Polypropylenglycold mit einem zahlengemittelten Molekulargewicht von ca. 1000 g/mol zur Synthese von Komponente B eingesetzt.

Die Konzentration an eingesetztem DMC-Katalysator beträgt typischerweise 10 bis 10000 ppm, besonders bevorzugt 20 bis 5000 ppm und höchst bevorzugt 50 bis 2000 ppm, bezogen auf die Masse des herzustellenden Polyoxymethylen-Block-Copolymers. Je nach Anforderungsprofil der nachgeschalteten Anwendung kann der DMC-Katalysator im Produkt belassen oder (teilweise) abgetrennt werden. Die (teilweise) Abtrennung des DMC-Katalysators kann beispielsweise durch Behandlung mit Adsorbentien und/oder Filtration erfolgen. Verfahren zur Abtrennung von DMC-Katalysatoren sind beispielsweise beschrieben in US-A 4,987,271, DE-A 3132258, EP-A 0 406 440, US-A 5,391,722, US-A 5,099,075, US-A 4,721,818, US-A 4,877,906 und EP-A 0 385 619. Erfindungsgemäß bevorzugt enthält die Komponente B, sowie gegebenenfalls auch Komponente C einen Restgehalt an DMC-Katalysator(en), so dass Komponente B und Komponente C insgesamt einen Gehalt an DMC-Katalysator(en) von 10 bis 5.000 ppm enthält, bevorzugt von 10 bis 3.000 ppm, jeweils bezogen auf die Gesamtmenge an Komponente B und C.

In einer bevorzugten Ausführungsform des erfindungsgemäßen Verfahrens wurde zumindest Komponente B in Anwesenheit eines Doppelmetallcyanid-Katalysators hergestellt und die Komponente B enthält diesen Doppelmetallcyanid-Katalysator zumindest noch teilweise, wobei der Gehalt an Doppelmetallcyanid-Katalysator bezogen auf die Gesamtmenge an Komponente B und C 10 bis 5000 ppm, bevorzugt 10 bis 3000, besonders bevorzugt 10 bis 2500 ppm, beträgt und der Gehalt an Doppelmetallcyanid-Katalysator anhand der nach DIN-ISO 17025 (August 2005) festgestellten Menge des Gehalts an Metall aus dem Doppelmetallcyanid-Katalysator ermittelt wird. Die Menge des Gehalts an Metall aus dem DMC-Katalysator kann entweder für Komponente B und C in Summe oder alternativ für jede der beiden Komponenten gesondert ermittelt werden. Mit den Angaben über den Gehalt an Metall aus dem DMC-Katalysator und dem Molekulargewicht des DMC-Katalysators kann dann die Menge an Katalysator berechnet werden. Dabei ist zu berücksichtigen, dass Doppelmetallcyanid-Katalysatoren verschiedene Metalle in jeweils unterschiedlichen Mengen enthalten können.

Als Epoxid (Alkylenoxid) werden für die Herstellung der Polyoxymethylen-Polyoxyalklyen-Blockcopolymere bevorzugt Verbindungen der allgemeinen Formel (I): 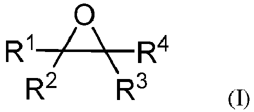 eingesetzt, wobei R¹, R², R³ und R⁴ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Bevorzugt werden solche Alkylenoxide eingesetzt, welche sich für die Polymerisation in Gegenwart eines DMC-Katalysators eignen. Werden verschiedene Alkylenoxide verwendet, so können diese entweder als Mischung oder nacheinander zudosiert werden. Bei letzterer Dosierweise können die Polyetherketten des hierüber erhaltenen Polyoxymethylen-Polyoxyalkylen-Blockcopolymers ihrerseits ebenfalls eine Blockstruktur aufweisen.

Allgemein können Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxy¬propyl¬trimethoxysilan, 3-Glycidyioxypropyltriethoxysilan, 3-Glycidyloxypropyltripropoxysilan, 3-Glycidyloxy¬propyl-methyl-dimethoxysilan, 3-Glycidyloxy-propyl-ethyldiethoxysilan, 3-Glycidyloxy-propyl-triisopropoxysilan. Vorzugsweise ist das Epoxid der allgemeinen Formel (I) ein terminales Epoxid, wobei R¹, R² und R³ für Wasserstoff stehen, und R⁴ Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann. Vorzugsweise werden als Alkylenoxide Ethylenoxid und/oder Propylenoxid, insbesondere Propylenoxid eingesetzt.

Vorzugsweise wird das erfindungsgemäße Verfahren derart durchgeführt, dass sich an die Aktivierung des Katalysators (Schritt i) ein Polymerisationsschritt (ii) unter Dosierung von einem oder mehreren Alkylenoxiden anschließt.

In einer weiteren Ausführungsform des erfindungsgemäßen Verfahrens erfolgt die Polymerisation der Alkylenoxide in Schritt ii) in Gegenwart eines weiteren Comonomers. Als weitere Comonomere können beispielsweise alle Sauerstoffhaltigen cyclischen Verbindungen, insbesondere zyklische Ether, wie z.B. Oxetan, THF, Dioxan oder zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid, Glutarsäureanhydrid oder Phthalsäureanhydrid sowie Kohlendioxid zum Einsatz kommen. Bevorzugt wird als Comonomer Kohlendioxid eingesetzt.

Die Dosierung weiterer Comonomere kann in Reinsubstanz, in Lösung oder als Mischung mit einem oder mehreren Alkylenoxiden erfolgen. Die Dosierung weiterer Comonomere kann ebenfalls parallel zu der Dosierung oder im Anschluss an die Dosierung der Alkylenoxide erfolgen.

In einer bevorzugten Ausführungsform des erfindungsgemäßen Verfahrens erfolgt neben der Anlagerung des oder der Alkylenoxide an die polymere Formaldehyd-Starterverbindung auch die Anlagerung von Kohlendioxid (CO₂) als weiteres Comonomer. Hierüber lassen sich Polyoxymethylen-Polyoxyalkylencarbonat-Copolymere herstellen. Diese weisen im Vergleich zu existierenden Produkten (zum Beispiel Polyetherpolyole im Polyurethanbereich beziehungsweise Polyoxymethylen-(Co-)Polymere im POM-Sektor) zusätzlich CO₂ als kostengünstiges und umweltfreundliches Comonomer auf. Da CO₂ u.a. ein Abfallprodukt der Energiegewinnung aus fossilen Rohstoffen ist und hier einer erneuten chemischen Verwertung zugeführt wird, ergeben sich durch den Einbau des CO₂ in die Polymerstrukturen neben ökonomischen auch ökologische Vorteile (günstige CO₂-Bilanz der Produktpolymere, etc.).

Polyoxymethylen-Polyoxyalkylencarbonat-Blockcopolymere im Sinne der Erfindung bezeichnen polymere Verbindungen, die mindestens einen Polyoxymethylen-Block sowie mindestens einen Polyoxyalkylencarbonat-Block enthalten. Polyoxymethylen-Polyoxyalkylencarbonat-Blockcopolymere sind besonders interessant als Einsatzstoffe im Polyurethanbereich, sowie für Anwendungen im Polyoxymethylen (POM)-Sektor. Durch Veränderung des CO₂-Gehaltes können die physikalischen Eigenschaften auf die jeweilige Anwendung angepasst werden, wodurch neue Anwendungsgebiete für diese Blockcopolymere erschlossen werden können. Insbesondere lassen sich über das erfindungsgemäße Verfahren Polyoxymethylen-Polyoxyalkylencarbonat-Copolymere bereitstellen, wobei ein hoher Gehalt an eingebautem CO₂ erreicht wird, die Produkte eine vergleichsweise niedrige Polydispersität aufweisen und sehr wenige Neben- und Zersetzungsprodukte des polymeren Formaldehyds enthalten.

**Komponente C** umfasst die **Komponente Ci** und die optional zu verwendende Komponente **Cii**.

**Komponente Ci** umfasst mindestens einem aminogruppenhaltigen Polyether auf Basis von Propylenoxid mit einer OH-Zahl im Bereich von 40 bis 80 mg KOH/g, vorzugsweise 45 bis 75 und besonders bevorzugt 50 bis 70, einer OH-Funktionalität von 4,0 und einem Amingehalt im Bereich von 0,50 bis 1,00, vorzugsweise 0,56 bis 0,94 und besonders bevorzugt 0,62 bis 0,88 Gew.-%. Als Startermoleküle für die Ausgangsverbindungen Ci kommen beispielsweise Diamine, wie z. B. Ethylendiamin, Hexamethylendiamin, Isophorondiamin,Toluoldiamin und 4,4'-Diaminodicyclohexylmethan in Betracht. Bevorzugt enthält die Zusammensetzung zur Herstellung des Isocyanat-terminierten Prepolymers 10 Gew.-% bis 30 Gew.-% von Komponente Ci, bezogen auf die Summe aller Komponenten in der Zusammensetzung.

**Komponente Cii** umfasst mindestens einem aminogruppenhaltigen Polyether auf Basis von Ethylenoxid, Propylenoxid oder einer Mischung von Ehylenoxid und Propylenoxid mit einer NH₂-Funktionalität von 2 oder 3, ausgenommen aminogruppenhaltige Polyether der Komponente Ci. Bevorzugt weisen die aminogruppenhaltigen Polyether der Komponente Cii keine OH-Funktionen auf (OH-Funktionalität = 0).

Bevorzugte aminogruppenhaltige Polyether dieser Art entsprechend den folgenden allgemeinen Formeln 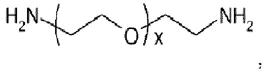 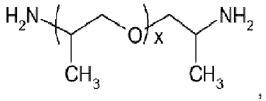 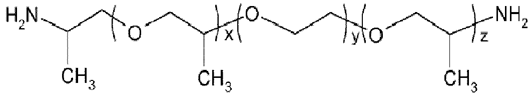 und 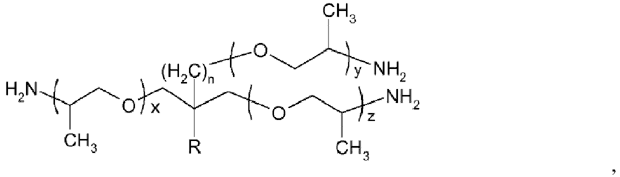 worin x eine Zahl von 0 bis 10, y ist eine Zahl von 0 bis 40 und z ist eine Zahl von 0 bis 10, EO Ethylenoxid und PO Propylenoxid ist. Beispiele solcher aminogruppenhaltigen Polyether sind die unter dem Namen JEFFAMINE^{®} von der Huntsman Corporation erhältlichen Produkte. Bevorzugt werden aminogruppenhaltigen Polyether der Serien JEFFAMINE^{®} D, JEFFAMINE^{®} ED, JEFFAMINE^{®} T und JEFFAMINE^{®} XTJ eingesetzt.

Bei den aminogruppenhaltigen Polyethern der JEFFAMINE^{®} D-Serie handelt es sich um aminterminierte Polypropylenglykole (PPG) der allgemeinen Formel 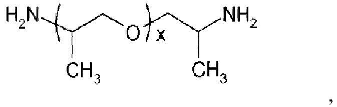 worin x eine Zahl von 2 bis 8 ist.

Die aminogruppenhaltigen Polyether der JEFFAMINE^{®} ED-Serie weisen ein vorwiegend Polyethylenglykol (PEG)-basiertes Rückgrat auf und entsprechen der allgemeinen Formel 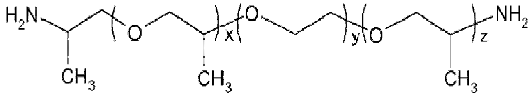 wobei y eine Zahl von 5 bis 40 ist und die Summe von x + z eine Zahl von 3 bis 8 ist.

Bei den aminogruppenhaltigen Polyethern der JEFFAMINE^{®} T-Serie handelt es sich um aminterminierte Polypropylenglykole (PEG) der allgemeinen Formel 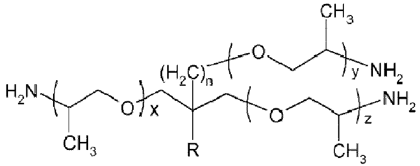 wobei R Wasserstoff, CH₃ oder C₂H₅, n eine Zahl 0, 1 oder 2 und x + y + z = eine Zahl von 3 bis 100 ist.

Die aminogruppenhaltigen Polyether der JEFFAMINE^{®} XTJ-Serie sind langsamere Amine, mit analogem Aufbau zu den Aminen der D- und T-Serie. Bei den aminogruppenhaltigen Polyethern der Serie JEFFAMINE^{®} XTJ handelt es sich um primäre Amine, die durch Aminierung von Epoxyterminierten Polyethern hergestellt werden. Die Reaktion führt zu primären Aminen mit terminalen Gruppen der Formel

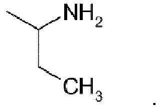

Bevorzugte aminogruppenhaltigen Polyether aus der Produktgruppe der JEFFAMINE^{®} sind JEFFAMINE^{®} D und JEFFAMINE^{®} T.

Bevorzugt enthält die Zusammensetzung zur Herstellung des Isocyanat-terminierten Prepolymers 0 bis 15 Gew.-% von Komponente Cii, bezogen auf die Summe aller Komponenten in der Zusammensetzung.

Die Verbindungen der **Komponente C** können mittels DMC-Katalyse oder auch auf anderen bekannten Herstellungswegen erzeugt sein. Im Falle des Einsatzes eines DMC-Katalysators gelten im Wesentlichen dieselben Angaben hierzu wie vorstehend zur Komponente B dargestellt.

Bei der optional im erfindungsgemäßen Verfahren einzusetzenden **Komponente D** handelt es sich um Hilfsstoffe, wobei die Hilfsstoffe bevorzugt Verbindungen mit antioxidativer Wirkung sind, sog. Antioxidantien **(Komponente D1).** Geeignete Antioxidantien sind vorzugsweise sterisch gehinderten Phenole, welche vor-zugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thio-diethyl-bis[3-(3,5-di-tert-butyl-4-hydroxyphenyl)propionat]. Diese können bei Bedarf sowohl einzeln als auch in beliebigen Kombinationen untereinander eingesetzt werden. Bevorzugt enthält die Zusammensetzung zur Herstellung des Isocyanat-terminierten Prepolymers 0,10 bis 0,20 Gew.-% von Komponente D1, bezogen auf die Summe aller Komponenten in der Zusammensetzung.

Desweiteren können als Hilfsstoffe z.B. auch Protonensäuren eingesetzt werden (**Komponente D2**). Dabei handelt es sich um anorganische Säuren, Carbonsäuren, halogenierte Carbonsäuren, Dicarbonsäuren, Hydroxycarbonsäuren, Sulfonsäuren, Phosphorsäure, Phosphorsäurederivate, Paratoluolsulfonsäuren oder ein Ammoniumsalz. Bevorzugt ist Komponente D2 ausgewählt aus der Gruppe bestehend aus Benzoylchlorid, o-Chlorbenzoesäure, Ammoniumnitrat, Ammoniumchlorid, Bortrichlorid, Bortrifluorid, Bromessigsäure, Chloressigsäure, Trichloressigsäure, 2-Chloropropionsäure, Zitronensäure, Malonsäurediethylester, Diphenylessigsäure, Ameisensäure, Zimtsäure, Salicylsäure, Naphtoesäure, Oxalsäure, Fumarsäure, Maleinsäure, Citraconsäure, Adipinsäure, Glutarsäure, Bernsteinsäure, Malonsäure, Phthalsäure, Isophthaloyl Chlorid, Terephthaloyl Chlorid, Äpfelsäure, Weinsäure, Harnsäure (2,6,8-trihydroxypurin), Pikrinsäure (2,4,6-Trinitrophenol), Phosphorsäure, Diphosphorsäure, Dibutylphosphat, Schwefelsäure, Salzsäure, Methansulfonsäure und p-Toluolsulfonsäurechlorid. Besonders bevorzugt ist Dibutylphosphat, Salzsäure oder 2-Chloropropionsäure. Die Zusammensetzung zur Herstellung des Isocyanat-terminierten Prepolymers enthält 0 bis 0,50 Gew.-%, bevorzugt 0 bis 0,30 Gew.-%, besonders bevorzugt 0 bis 0,20 Gew.-%, von Komponente D2, bezogen auf die Summe aller Komponenten in der Zusammensetzung. Am meisten bevorzugt erfolgt die Herstellung des erfindungsgemäßen Isocyanat-terminierten Prepolymers ohne Zusatz einer Protonensäure D2. Die Herstellung der erfindungsgemäßen Isocyanat-terminierten Prepolymere erfolgt zweckmäßig durch Reaktion der Isocyanatkomponenten A mit den Polyolkomponenten B und C, optional Hilfsmittel D. Vorzugsweise wird die Isocyanatkomponente A in molarem Überschuss üblicherweise in einem Reaktionskessel vorgelegt und bei Temperaturen im Bereich von 20 bis 160 °C, vorzugsweise 40 bis 140 °C die Polyolkomponenten B und C entweder als Gemisch oder nacheinander zudosiert. Eine eventuell auftretende Exothermie wird zweckmäßig durch Kühlung so abgefangen, dass die Reaktion zwischen den Isocyanatgruppen der Isocyanatkomponente mit den Hydroxylgruppen der Hydroxylkomponenten bei konstanter Temperatur abläuft. Die Reaktion ist beendet, wenn die gewünschten Isocyanatgehalte bzw. Viskositäten der erfindungsgemäßen Isocyanat-terminierten Prepolymeren erreicht sind.

Im Falle der Verwendung von monomeren Diisocyanaten müssen eventuell vorhandene Restmengen an diesen Isocyanaten im Anschluss an die Urethanreaktion entfernt werden, beispielsweise durch Destillation oder Extraktion, um Produkte mit Restmonomergehalten von < 1 Gew.-%, vorzugsweise < 0,5 Gew.-% und besonders bevorzugt < 0,3 Gew.-% zu erhalten. Im Falle der Verwendung von Polyisocyanaten zur Herstellung der erfindungsgemäßen Isocyanat-terminierten Prepolymeren, ist nach der Urethanreaktion eine Entfernung von überschüssigen Restmonomeren nicht mehr erforderlich, weil Polyisocyanate bereits Restmonomeranteile in dem geforderten Bereich von < 0,5 Gew.-% aufweisen.

Die Reaktionskomponenten werden vorzugsweise in den Mengenverhältnissen eingesetzt, dass die zuvor beschriebenen Eigenschaften der Isocyanat-terminierten Prepolymeren, insbesondere die Viskosität, der Isocyanatgehalt und die Funktionalität erreicht werden.

Weitere Gegenstände dieser Erfindung sind Isocyanat-terminierte Prepolymere, erhältlich nach dem vorangehend beschriebenen Verfahren, die Verwendung dieser Prepolymere als Isocyanat-Komponente in 1- und 2- komponentigen Lack-, Kleb- und Dichtstoffsystemen, , sowie die 1- und 2-komponentigen Lack-, Kleb- und Dichtstoffsysteme selbst.

Die resultierenden erfindungsgemäßen Isocyanat-terminierten Prepolymeren eignen sich für den Einsatz als einkomponentig feuchtigkeitshärtende Beschichtungsmittel, Kleb- und Dichtstoffe. Weiterhin eignen sich die erfindungsgemäßen Isocyanat-terminierten Prepolymeren für den Einsatz in zweikomponentig härtenden Beschichtungsmittel, Kleb- und Dichtstoffe. Dazu werden als Reaktionspartner kommerziell erhältliche Polyole und/oder Polyamine (Funktionalität jeweils ≥ 2) eingesetzt. Solche Polyole und/oder Polyamine wurden bereits zuvor beschrieben. Darüber hinaus sind als weitere Polyole lösemittelfreie und lösemittelhaltige Polyacrylatpolyole, wie sie z. B. unter dem Handelsnamen Desmophen^{®} A von der Viverso GmbH, Bitterfeld, erhältlich sind. Weiterhin können als Reaktionspartner für die erfindungsgemäßen Isocyanat-terminierten Prepolymere Asparaginsäureester eingesetzt werden. Bei dieser speziellen Art von Polyaminen handelt es sich um Produkte mit reduzierter Reaktivität der sekundären Aminogruppen. Dadurch ist es möglich, Zweikomponentensysteme mit einer angemessenen Topfzeit (Potlife) im Bereich von 10 bis 60 Minuten zu formulieren, was aufgrund der hohen Reaktivität von üblichen primäre oder sekundäre Aminogruppen aufweisenden Verbindungen nicht möglich ist. Beispiele für geeignete Asparaginsäureester sind z. B. Desmophen^{®} NH 1220, Desmophen^{®} NH 1420, Desmophen^{®} NH 1520 und Desmophen^{®} NH 1521 der Covestro Deutschland AG.

Die Auswahl der geeigneten Polyole und/oder Polyamine sowie der erfindungsgemäßen isocyanatfunktionellen Prepoylmeren erfolgt in der Regel derart, dass die für den jeweiligen Einsatzzweck optimalen Produkteigenschaften resultieren.

Weitere Gegenstände der vorliegenden Erfindung sind somit Lack-, Kleb- oder Dichtstoffsysteme, wobei es sich um 1-komponentige feuchtigkeitshärtende Systeme handelt, sowie Lack-, Kleb- oder Dichtstoffsysteme, wobei es sich um 2-komponentige Systeme handelt, die neben dem erfindungsgemäßen Isocyanat-terminierten Prepolymer weiterhin mindestens eine Isocyanat-reaktive Komponente aufweisen. Dabei ist unter einer Isocyanat-reaktiven Komponente eine Verbindung zu verstehen, die wenigstens eine gegenüber Isocyanaten reaktive Gruppe trägt, wie z.B. Di- und Polyole und Di- und Polyamine.

### Beispiele

### Materialien

| | |
|---|---|
| Isocyanat 1: | Aromatisches Polyisocyanat auf Basis Diphenylmethandiisocyanat (MDI) mit einem NCO-Gehalt von 31,5% (31.8), einem Gehalt an 2,2'-MDI von 2,3%(0.1), einem Gehalt an 2,4'-MDI von 12,6%(12.7) und einem Gehalt an 4,4'-MDI von 42,4%(54,4)) sowie einer Viskosität von 90 (100)mPas bei 25 °C |
| Polyol 1: | Polyoxymethylen-Polypropylenoxid Block-Copolymer mit einer OH-Zahl von 112 mg KOH/g hergestellt unter Doppelmetallcyanid-Katalyse, wobei der Doppelmetallcyanid-Katalysator gemäß Beispiel 6 der WO 01/80994 A1 hergestellt wurde |
| Polyol 2: | Polyoxymethylen-Polypropylenoxid Block-Copolymer mit einer OH-Zahl von 56 mg KOH/g hergestellt unter Doppelmetallcyanid-Katalyse, wobei der Doppelmetallcyanid-Katalysator gemäß Beispiel 6 der WO 01/80994 A1 hergestellt wurde |
| Polyol 3: | Polyoxymethylen-Polypropylenoxid Block-Copolymer mit einer OH-Zahl von 18 mg KOH/g hergestellt unter Doppelmetallcyanid-Katalyse, wobei der Doppelmetallcyanid-Katalysator gemäß Beispiel 6 der WO 01/80994 A1 hergestellt wurde |
| Polyol 4: | Polypropylenoxidpolyether auf Basis von 1,2-Propylenglycol mit einer OH-Zahl von 112 mg KOH/g |
| Polyol 5: | Polypropylenoxidpolyether auf Basis von 1,2-Propylenglycol mit einer OH-Zahl von 56 mg KOH/g |
| Polyol 6: | Polypropylenoxidpolyether auf Basis von 1,2-Propylenglycol mit einer OH-Zahl von 14 mg KOH/g |
| Polyol 7: | Polypropylenoxidpolyether auf Basis von 1,2-Diaminoethan mit einer OH-Zahl von 60 mg KOH/g und einem Amingehalt von 0,7 Gew.-%. |

### Methoden

Die OH-Zahlen wurden titrimetrisch in Anlehnung an DIN 53240-2:2007-11bestimmt.

Der Amingehalt wurde titrimetrisch gemäß DIN EN 9702:1998 bestimmt.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Filmbildungszeit (FBZ, dry-hard time) und Filmtrocknungszeiten (FTZ, set-to-touch time) wurden nach ASTM D 5895:2013-06 im linearen Drying- Recorder bestimmt.

Zugscherfestigkeit der Verklebung Buche / Buche ohne Spalt bei Beanspruchung durch Zugkräfte parallel zur Klebfläche nach DIN EN 205:2016-12 gemessen.

### Synthesen

### Beispiel 1:

Eine Mischung von 175,0 g Polyoxymethylen-Polypropylenoxid Block-Copolymer mit einer OH-Zahl von 112 mg KOH/g hergestellt unter Doppelmetallcyanid-Katalyse (Polyol 1) und 214,5 g Polypropylenoxidpolyether auf Basis von 1,2-Diaminoethan mit einer OH-Zahl von 60 mg KOH/g und einem Amingehalt von 0,7 Gew.% (Polyol 7) wird in einem 1 Liter Planschliffgefäß vorgelegt und 1 Stunde bei 120 °C unter einem Vakuum von 20 mbar gerührt. Danach wird auf 55 °C abgekühlt. Die erhaltene Polyolmischung wird innerhalb von ca. 30 Minuten zu 571,0 g eines aromatischen Polyisocyanat auf Basis Diphenylmethandiisocyanat (MDI) mit einem NCO-Gehalt von 31,5%, einem Gehalt an 2,2'-MDI von 2,3%, einem Gehalt an 2,4'-MDI von 12,6% und einem Gehalt an 4,4'-MDI von 42,4% sowie einer Viskosität von 90 mPas bei 25 °C (Isocyanat 1) zudosiert. Danach wird unter Ausnutzung einer eventuell auftretenden exothermen Reaktion auf 60 °C erwärmt. Es wird so lange bei 60 °C gerührt bis der Isocyanatgehalt konstant ist. Es resultiert eine bräunlich gefärbte Polyisocyanatmischung mit einem NCO-Gehalt von 15,2 Gew.-%, einer Viskosität von 35600 mPas (23 °C) und einer durchschnittlichen Isocyanatfunktionalität von 2,7.

### Beispiel 2 bis 3:

Nach dem in Beispiel 1 beschriebenen Verfahren wurden weitere Polyisocyanate unter Verwendung der in Tabelle 1 zusammengefassten Polyole hergestellt. Die resultierten Kenndaten sind ebenfalls in Tabelle 1 zusammengefasst.

### Vergleichsbeispiel 4 bis 6:

Nach dem in Beispiel 1 beschriebenen Verfahren wurden weitere Polyisocyanate unter Verwendung der in der Tabelle 1 zusammengefassten Polyole hergestellt. Die resultierten Kenndaten sind ebenfalls in der Tabelle 1 zusammengefasst.

### Anwendungstechnische Prüfungen

### Prüfung der Reaktivität als Reaktivklebstoff

Als Vergleich der Reaktivität wurden die Filmbildungszeit (FBZ, dry-hard time) und Filmtrocknungszeiten (FTZ, set-to-touch time) nach ASTM D 5895:2013 im linearen Drying-Recorder und die Viskosität bei 25 °C (in Anlehnung an DIN EN ISO 3219:1994-10) gemessen. Die Nassschichtdicke des Reaktivklebstoffes betrug dabei 250 µm. Ferner wurde die Lagerstabilität bei 70 °C in Form des Viskositätsanstieges über die Zeit gemessen. Die Polyisocyanatmischung gilt als lagerstabil, wenn sich die Viskosität innerhalb von 14 Tagen Lagerung bei 70 °C weniger als verdoppelt hat.

Das erfindungsgemäße Polyisocyanatgemisch gemäß Beispiel 1 hat eine mit dem Beispiel 4 (Vergleich) höhere Viskosität und vergleichbare Lagerstabilität. Die Reaktivität des erfindungsgemäßen Polyisocyanatgemischs gemäß Beispiel 1, die sich in kürzeren Filmbildungs- und Filmtrocknungszeiten widerspiegelt, ist jedoch deutlich höher als die Reaktivität des Vergleichsbeispiels.

Dieser Effekt ist bei Beispiel 2 noch deutlicher zu beobachten. Im Gegensatz zum Vergleichsbeispiel 5 ist die Reaktivität des erfindungsgemäßen Polyisocyanats signifikant höher als die Reaktivität des Vergleichsbeispiels.

Das erfindungsgemäße Polyisocyanat Beispiel 3 zeigt neben erhöhter Reaktion von den drei genannten Beispielen auch die niedrigste Viskosität.

### Prüfung der Zugscherfestigkeit als Reaktivklebstoff

Als Vergleich der haftenden Wirkung wurde die Zugscherfestigkeit der Verklebung Buche / Buche ohne Spalt bei Beanspruchung durch Zugkräfte parallel zur Klebfläche nach DIN EN 205:2016 gemessen. Die Prüfung der Zugscherfestigkeit erfolgte nach den in der untenstehenden Tabelle zusammengefassten Zeitintervallen.

Das erfindungsgemäße Polyisocyanatgemisch gemäß Beispiel 1 erfährt nach 60 min eine mit dem Beispiel 4 (Vergleich) höhere Kraft, bis der Prüfkörper zu Bruch kommt. Dies ist ebenfalls durch die Beipiele 2 und 3 gezeigt, die gegenüber den Vergleichsbeispielen 5 und 6 eine höhere Kraft erfahren bis der Prüfkörper zu Bruch kommt.

Die Klebkraft des erfindungsgemäßen Polyisocyanatgemischs gemäß Beispiel 1, die sich in höheren Zugscherfestigkeiten widerspiegelt, ist deutlich höher als die Klebkraft des Vergleichsbeispiels.

**Tabelle 1: Zusammenfassung der Zusammensetzung und Kenndaten der Beispiele.**

| | erfindungsgemäß | | | Vergleich | | |
|---|---|---|---|---|---|---|
| Beispiel | 1 | 2 | 3 | 4 | 5 | 6 |
| Gemisch | | | | | | |
| Polyisocyanat [g] | 571,0 | 571,0 | 571,0 | 571,0 | 571,0 | 571,0 |
| Polyol 1 [g] | 175,0 | - | - | - | - | - |
| Polyol 2 [g] | - | 214,0 | - | - | - | - |
| Polyol 3 [g] | - | - | 250,0 | - | - | - |
| Polyol 4 [g] | - | - | - | 175,0 | - | - |
| Polyol 5 [g] | - | - | - | - | 214,0 | - |
| Polyol 6 [g] | - | - | - | - | - | 250,0 |
| Polyol 7 [g] | 214,5 | 214,5 | 214,5 | 214,5 | 214,5 | 214,5 |
| NCO-Gehalt [Gew.-%] | 15,3 | 15,0 | 15,4 | 15,2 | 15,0 | 15,4 |
| Viskosität [mPas (23 °C)] | 41800 | 22800 | 21000 | 35600 | 19400 | 14700 |
| Isocyanatfunktionalität | 2,7 | 2,8 | 2,8 | 2,8 | 2,8 | 2,8 |
| FBZ [min] | 30 | 25 | 30 | 35 | 40 | 30 |
| FTZ [min] | 90 | 80 | 80 | 95 | 95 | 85 |
| Lagerstabil (innerhalb 14d bei 70 °C) | ja | ja | ja | ja | ja | ja |
| Zugscherfestigkeit nach 0,5 h [N/mm²] | 0,0 | 0,0 | 0,0 | 0,0 | 0,0 | 0,0 |
| Zugscherfestigkeit nach 1 h [N/mm²] | 6,8 | 1,9 | 2,0 | 3,9 | 0,6 | 1,3 |

## Patentansprüche

1. Verfahren zur Herstellung von Isocyanat-terminierten Prepolymeren zur Verwendung als Isocyanat-Komponente in 1- und 2-komponentigen Lack-, Kleb- und Dichtstoffsystemen, umfassend die oder bestehend aus der Umsetzung von
A. mindestens einem aliphatischen, cycloaliphatischen, araliphatischen und/oder aromatischen Polyisocyanat, wobei Komponente A einen NCO-Gehalt nach DIN EN ISO 11909:2007-05 von 15 bis 45 Gew.-% aufweist,
B. mindestens einem Polyoxymethylen-Polyoxyalkylen-Blockcopolymer mit einer Hydroxylzahl gemäß DIN 53240-2:2007-11 von 15 mg KOH/g bis 200 mg KOH/g,
C.
i) mindestens einem aminogruppenhaltigen Polyether auf Basis von Propylenoxid mit einer Hydroxylzahl gemäß DIN 53240-2:2007-11 von 40 bis 80 mg KOH/g, einer OH-Funktionalität von 4,0 und einem Amingehalt gemäß DIN EN 9702:1998 im Bereich von 0,5 bis 1,0 Gew.-%,
ii) optional mindestens einem aminogruppenhaltigen Polyether auf Basis von Ethylenoxid, Propylenoxid oder einer Mischung von Ehylenoxid und Propylenoxid mit einer NH₂-Funktionalität von 2 oder 3, ausgenommen aminogruppenhaltige Polyether der Komponente Ci,
D. optional Hilfsstoffe, enthaltend Protonensäuren (D2) und/oder Hilfsstoffe, bei denen es sich nicht um Protonensäuren gemäß D2 handelt (D1).

2. Verfahren nach Anspruch 1, **dadurch gekennzeichnet, dass** Komponente B aus einem Polyoxymethylen-Polypropylenoxid-Blockcopolymer oder ein Polyoxymethylen-Polyoxyalkylencarbonat-Blockcopolymer besteht, wobei das Blockcopolymer bevorzugt zwei endständige Polyoxyalkylenblöcke aufweist.

3. Verfahren nach Anspruch 1 oder 2, **dadurch gekennzeichnet, dass** zumindest Komponente B in Anwesenheit eines Doppelmetallcyanid-Katalysators hergestellt wurde und die Komponente B diesen Doppelmetallcyanid-Katalysator noch zumindest teilweise enthält, wobei der Gehalt an Doppelmetallcyanid-Katalysator bezogen auf die Gesamtmenge an Komponente B und C 10 bis 5000 ppm, bevorzugt 10 bis 3000 ppm, beträgt und der Gehalt an Doppelmetallcyanid-Katalysator anhand der nach DIN-ISO 17025 (August 2005) festgestellten Menge des Gehalts an Metall aus dem Doppelmetallcyanid-Katalysator ermittelt wird.

4. Verfahren nach einem der vorstehenden Ansprüche, **dadurch gekennzeichnet, dass** das Polyoxymethylen-Polyoxyalkylen-Blockcopolymer der Komponente B bzw. das die Polyoxymethylen-Polyoxyalkylen-Blockcopolymer der Komponente B jeweils eine Hydroxylzahl gemäß DIN 53240-2:2007-11 von 15 mg KOH/g bis 150 mg KOH/g, bevorzugt von 15 mg KOH/g bis 120 mg KOH/g, besonders bevorzugt von 18 mg KOH/g bis 112 mg KOH/g, aufweist bzw. aufweisen.

5. Verfahren nach einem der vorstehenden Ansprüche, **dadurch gekennzeichnet, dass** der aminogruppenhaltige Polyether der Komponente Ci bzw. die aminogruppenhaltigen Polyether der Komponente Ci jeweils eine Hydroxylzahl gemäß DIN 53240-2:2007-11 von 45 bis 75 mg KOH/g, bevorzugt 50 bis 70 mg KOH/g aufweist bzw. aufweisen.

6. Verfahren nach einem der vorstehenden Ansprüche, **dadurch gekennzeichnet, dass** der aminogruppenhaltige Polyether der Komponente Ci bzw. die aminogruppenhaltigen Polyether der Komponente Ci jeweils einem Amingehalt gemäß gemäß DIN EN 9702:1998 von 0,56 bis 0,94 Gew.-%, bevorzugt 0,62 bis 0,88 Gew.-% aufweist bzw. aufweisen.

7. Verfahren nach einem der vorstehenden Ansprüche, **dadurch gekennzeichnet, dass** Komponente A mindestens ein aromatisches Polyisocyanat umfasst, bevorzugt 1,5-Naphthalendiisocyanat (NDI), Diisocyanatodiphenylmethan (2,2'-, 2,4'- und 4,4'-MDI), insbesondere das 2,4'- und das 4,4'-Isomere und technische Gemische dieser beiden Isomere oder technische Gemische von 2,2'-, 2,4'- und 4,4'-MDI, Poly(methylenphenylisocyanat) (pMDI, polymeres MDI, rohes MDI), Diisocyanatomethylbenzol (2,4- und 2,6-Toluylendiisocyanat, TDI), insbesondere das 2,4- und das 2,6-Isomere und technische Gemische der beiden Isomeren.

8. Verfahren nach einem der vorstehenden Ansprüche, **dadurch gekennzeichnet, dass** das Isocyanat-terminierte Prepolymer erhalten wird oder erhältlich ist durch Umsetzung einer Zusammensetzung enthaltend oder bestehend aus
- 50 bis 70 Gew.-% von Komponente A,
- 15 bis 30 Gew.-% von Komponente B,
- 10 bis 30 Gew.-% von Komponente Ci,
- 0 bis 15 Gew.-% von Komponente Cii,
- 0,10 bis 0,20 Gew.-% von Komponente D1,
- 0 bis 0,50 Gew.-% von Komponente D2,
wobei die Gew.-% bezogen sind auf die Summe aller Komponenten der Zusammensetzung.

9. Isocyanat-terminiertes Prepolymer, erhalten durch oder erhältlich durch ein Verfahren nach einem der Ansprüche 1 bis 8.

10. Verwendung der Isocyanat-terminierten Prepolymere gemäß Anspruch 9 in Lack-, Kleb- oder Dichtstoffsystemen.

11. Lack-, Kleb- oder Dichtstoffsysteme, enthaltend mindestens ein Isocyanat-terminiertes Prepolymer, gemäß Anspruch 9.

12. Lack-, Kleb- oder Dichtstoffsysteme gemäß Anspruch 11, wobei es sich um 1-komponentige feuchtigkeitshärtende Systeme handelt, die neben dem mindestens einen Isocyanat-terminierten Prepolymer keine Isocyanat-reaktiven Komponentenenthalten.

13. Lack-, Kleb- oder Dichtstoffsysteme gemäß Anspruch 11, wobei es sich um 2-komponentige Systeme handelt, die neben dem mindestens einen Isocyanat-terminierten Prepolymer mindestens eine Isocyanat-reaktive Komponente aufweisen.

14. Mit Lack-, Kleb- oder Dichtstoffsystemen gemäß Anspruch 11 bis 13 beschichtete oder verbundene Substrate.
